**Europäisches Patentamt**

**European Patent Office**

**Office européen des brevets**

(19)

(11) Veröffentlichungsnummer: **0 087 689**

**B1**

(12) **EUROPÄISCHE PATENTSCHRIFT**

(45) Veröffentlichungstag der Patentschrift:
23.07.86

(51) Int. Cl.⁴: **C 04 B 7/30**

(21) Anmeldenummer: **83101547.4**

(22) Anmeldetag: **18.02.83**

(54) Verfahren zur Verwertung von Ölschiefer.

(30) Priorität: **25.02.82 DE 3206728**

(43) Veröffentlichungstag der Anmeldung:
**07.09.83 Patentblatt 83/36**

(45) Bekanntmachung des Hinweises auf die Patenterteilung:
**23.07.86 Patentblatt 86/30**

(84) Benannte Vertragsstaaten:
**DE FR GB NL**

(56) Entgegenhaltungen:
DE-C-387 952
FR-A-1 006 185
US-A-1 536 165

ZEMENT-KALK-GIPS, Band 58, Nr. 7, Juli 1969,
Seiten 293-296, Wiesbaden, DE., R. ROHRBACH:
"Herstellung von Ölschieferzement und
Gewinnung elektrischer Energie aus Ölschiefer
nach dem Rohrbach-Lurgi-Verfahren"

(73) Patentinhaber: **Neumann- Venevere, Peter, Prof. Dr.- Ing., Sohlweg 6, D-3014 Laatzen 5 (DE)**

(72) Erfinder: **Neumann- Venevere, Peter, Prof. Dr.- Ing., Sohlweg 6, D-3014 Laatzen 5 (DE)**

(74) Vertreter: **Schulte, Jörg, Dipl.- Ing., Hauptstrasse 2, D-4300 Essen- Kettwig (DE)**

## Beschreibung

Die Erfindung betrifft ein Verfahren zur Herstellung-eines Baustoffs aus Ölschiefer mit hohem Gehalt an $CaCO_3$, wobei der Ölschiefer für Zwecke der Energiegewinnung gebrannt wird und der erzielte Abbrand zerkleinert und mit einer Feuchtigkeitsmenge in Berührung gebracht wird, die eine Umwandlung von freiem $CaO$ zu $Ca(OH)_2$ bewirkt.

Ölschiefer wird zur Energiegewinnung eingesetzt. Dabei fällt Asche bzw. Abbrand an, der die Wirtschaftlichkeit der Energiegewinnung bzw. Ölgewinnung übermäßig belastet. Für den Abbrand muß daher eine wirtschaftliche Verwendung gefunden werden, um Ölschiefer überhaupt zur Energiegewinnung einsetzen zu können.

Dabei kann ein Ölschiefer mit einem $CaCO_3$-Anteil von etwa 20 Gew.-%, d.h. einem Anteil von 1 bis 2 Gew.-% an freiem $CaO$ über den Brennprozeß in einen Abbrand umgewandelt werden, der anschließend zur Herstellung von Zement oder hochhydraulischem Kalk geeignet ist. Ölschiefer, der einen Anteil an $CaCO_3$ von 20 bis 40 Gew.-% oder mehr aufweist, erbringt nach dem Brennprozeß einen Abbrand, der weit über 2 Gew.-% an freiem $CaO$ aufweist. Diese Asche bzw. ein entsprechender Abbrand kann nicht zur Herstellung von Zement oder für die Fertigung von Mischbindern verwendet werden.

Der Anteil an freiem $CaO$ führt dazu, daß der Abbrand für sich und auch als Zusatz zu Zement oder mit dem Zementklinker-Zusatz zu Bindemittel vermahlen, kein brauchbares Bindemittel ergibt. Es entsteht vielmehr ein sogenannter Löffelbinder, der den Bedingungen der DIN 1164, Teil 5, "Portland-, Eisenportland-, Hochofen- und Traßzement; Bestimmung der Erstarrungszeiten mit dem Nadelgerät" sowie der DIN 1164, Teil 1, position 4.2 (Erstarren frühestens eine Stunde nach dem Anmachen beginnend und spätestens 12 Stunden nach dem Anmachen beendet), nicht entspricht. Die Herstellung eines normgerechten Zementes, beispielsweise unter Zusatz von 30 bis 70 Gew.-% puzzolanigen Abbrandes ist daher nicht möglich.

Es ist deshalb versucht worden, den mit so hohem $CaCO_3$-Anteil in der Natur vorkommenden Ölschiefer aufzubereiten, um ihn dann doch noch als Baustoff bzw. Zuschlag zu Baustoffen verwenden zu können. Hierzu wird der Ölschiefer aufgemahlen, dann mit Ton und gegebenenfalls Quarzmehl gemischt und zu Granulat verarbeitet. Das so korngeformte Rohgut wird dann einem Brennprozeß zugeführt, wobei ein Abbrand erhalten wird, der anschließend die Eigenschaften aufweist, die eine Verarbeitung zu einem Material gemäß DIN 1164 möglich macht. Die dafür notwendige Verfahrenstechnik ist aufwendig und insbesondere dadurch erschwert, daß unterschiedliche Rohstoffe zugesetzt werden müssen, um ein für den anschließenden Brennprozeß geeignetes Granulat zu erhalten. Eine wirtschaftliche Verwertung des Ölschiefers ist daher mit einem derartigen Verfahren in der Regel nicht möglich, zumal das zusätzlich benötigte Quarzmehl bzw. der Ton mit aufgeheizt werden müssen, was zu einem zusätzlichen Energiebedarf führt.

Durch die DE-C-387 952 ist ein Verfahren bekannt, bei dem Ölschieferschlacke zunächst zerkleinert und gesiebt wird. Nur das Feinkorn wird als Bindemittel verwendet. Gerade bei diesem Anteil wird der begleitende Kalk nicht gelöscht. Das Grobkorn wird mit Wasser durchfeuchtet und in diesem Zustand eine Woche lang gelagert. Danach wirkt es nicht mehr als Bindemittel, sondern als Füllstoff.

Durch die FR-A-1 006 185 ist es bekannt, Abbrände z.B. von bituminösen Schiefern mit Wasser, mit Dampf oder unter feuchter Atmosphäre zu behandeln und dadurch den freien Kalk zu hydratisieren. Die kalkreichen Bestandteile, die nach der Hydratation weicher sind als die silikatischen Bestandteile, werden durch Mahlen und anschließendes Sieben abgetrennt.

Der Erfindung liegt die Aufgabe zugrunde, ein Verfahren der eingangs angegebenen Gattung zu schaffen, mit dem Ölschiefer mit hohem $CaCO_3$-Gehalt zu einem in der Bauindustrie unter üblichen Bedingungen einsetzbaren Material ohne großen Aufwand und unter wirtschaftlichen Bedingungen verarbeitet werden kann.

Diese Aufgabe wird gemäß der Erfindung dadurch gelöst, daß der Abbrand durch Besprühen mit Wasser direkt gekühlt und anschließend auf unter 1 mm, insbesondere auf 0,5 bis 1 mm, gemahlen und während des Mahlvorganges mit dem bei der Kühlung entstehenden Dampf - gegebenenfalls unter Zusatz von weiterem Dampf oder Wasser - behandelt wird, wobei die zugeführte Dampf- oder Wassermenge über die Temperatur und den Wasserdampfpartialdruck der Brüden entsprechend einem $CaO$-Restgehalt von 0 bis 1 % geregelt wird.

Bei Anwendung des Verfahrens werden die Bestandteile des Abbrandes, die sonst zum sofortigen Abbinden des Abbrandes und von Mischungen aus diesem führen, zur Reaktion mit der Feuchte und zur Hydratisierung gebracht. Die Umwandlung des freien $CaO$ zu einem Kalkhydrat erfolgt in feuchter Atmosphäre, wobei die kleinen Flüssigkeitspartikel sich besonders wirksam mit den feinen Abbrandpartikeln verbinden, d.h. besonders günstig auf diese einwirken können. Der für die Mahlung des Abbrandes notwendige verfahrenstechnische Aufwand ist infolge der Weichheit des Abbrandes verhältnismäßig gering und macht sich darüber hinaus dadurch bezahlt, daß die anschließende Durchsetzung mit Feuchte intensiv einsetzen kann und dadurch rationell verläuft. Die vorgegebene Mahlfeinheit ist im übrigen für Zementzusätze sowieso vorgeschrieben, so daß der Zerkleinerungsprozeß praktisch nur vorgezogen wird und keinen Mehraufwand darstellt. Da eine Abhängigkeit besteht zwischen Partialdampfdruck in der Umgebungsatmosphäre und dem Verhältnis zwischen CaO zu Ca(OH)₂, wird die zugeführte Wassermenge über die Temperatur und die Feuchte der Brüden geregelt. So wird einerseits genügende Hydratation des freien CaO gewährleistet und andererseits Überfeuchtung vermieden. Ohne weiteres kann ein geringer, beispielsweise um 1 Gew.-% liegender Anteil an freiem CaO im Endprodukt verbleiben, da dieses freie CaO den Weiterverarbeitungsprozeß nicht mehr behindert.

Nach einer zweckmäßigen Ausführungsform des Verfahrens ist vorgesehen, daß der Abbrand im Verhältnis 30: 70 bis 70: 30, vorzugsweise 50: 50, mit Zement gemischt wird. Dies ergibt ein Bindemittel mit hoher Plastizität, das eine Festigkeit erbringt, die für die Weiterverarbeitung und Herstellung von Hohlblocksteinen oder Leichtbetonsteinen bestens geeignet ist. Der Anteil des Abbrandes kann im übrigen je nach den Erfordernissen insbesondere bezüglich der Härte nach oben oder unten variiert werden. Die einfachste Möglichkeit zum Beimischen des Zementes besteht darin, diesen dem fertig behandelten Abbrand zuzumischen.

Es ist aber auch möglich, den Abbrand zusammen mit Zementklinker zu mahlen und dabei oder anschließend Dampf oder Wasser zuzuführen. Dabei dient die Mühle als Mischer, so daß sich eine zusätzliche Mischvorrichtung erübrigt. Dagegen ist der Wasserverbrauch höher, da zusätzlich zur Hydratisierung des CaO unvermeidbar auch Wasser an den Klinker gebunden wird.

Bei dem Verfahren gemäß der Erfindung wird der auf 4 bis 10 mm zerkleinerte Ölschiefer zwischen 800° und 900° C in der Wirbelschicht gebrannt. Der heiße Abbrand aus dem Wirbelbett wird z.B. über einen Kettenförderer, eine Schwingrinne oder über einen Drehrohrförderer einer Mühle zugeführt. Das Fördermittel ist eingekapselt, und das darin befindliche heiße Gut wird zwecks Kühlung mit Wasser bedüst. Das dabei entstehende Dampf-Luftgemisch wird mittels eines Ventilators der Mühle zugeführt. Zusätzlich kann auch Wasser in die Mühle eingesprüht werden.

Das erfindungsgemäße Verfahren zeichnet sich insbesondere durch eine einfache und definierte Prozeßführung aus. Dabei kann die Nachbehandlung des Abbrandes in einfachen und wenig Kosten verursachenden Aggregaten vorgenommen werden. Sie bewirkt, daß das Abbinden des Abbrandes entsprechend DIN 1164 normalisiert wird. Besonders vorteilhaft ist, daß der einer gezielten Feuchtigkeitsaufbereitung unterworfene Abbrand des Ölschiefers mit hohem CaCO₃-Gehalt anschließend sowohl für die Herstellung spezieller Zemente als auch eines hochhydraulischen Kalkes verwendet werden kann. Dieses Verfahren ermöglicht erstmals die wirtschaftliche Verwertung des Abbrandes von Ölschiefern mit einem hohen Anteil an CaCO₃ in einem direkten Verfahren im Anschluß an den Brennprozeß des Ölschiefers zur Energiegewinnung. Wegen fehlender Verfahren zur Verwertung des Abbrandes wurden solche Ölschiefer bisher nicht genutzt. Das hier aufgezeigte Verfahren ermöglicht somit erstmals eine Nutzung derartiger Ölschiefervorkommen, führt zu einer Umweltentlastung bei gleichzeitiger Gewinnung eines wirtschaftlich wertvollen Stoffes.

**Beispiel**

Ein Ölschiefer mit folgender wesentlicher chemischer Zusammensetzung:

$SiO_2$ 12,3
$Al_2O_3$ 4,0
$Fe_2O_3$ 2,3
$TiO_2$ 0,3
$CaO$ 35,3
$MgO$ 0,5
$Na_2O$ 0,2
$K_2O$ 0,3
$P_2O_5$ 1,5
$SO_3$ 1,9
$CO_2$ u.a. 42,3

wurde zerkleinert und einem Brennprozeß in der Wirbelschicht bei 820 sowie bei 870° C unterworfen. Der erzielte Abbrand wies in beiden Fällen einen Gehalt an freiem CaO von 6,22 Gew.-% auf.

Dieser Abbrand wurde ohne und mit Zementzusatz mit Wasser angemacht. Alle Mischungen ergaben einen Löffelbinder, d.h. es erfolgte ein sehr schnelles Abbinden des Materials.

Der gleiche Abbrand wurde gemahlen und mit Wasserdampf behandelt, d.h. teilweise gelöscht. Das Produkt war ein puzzolaniger Stoff, der mit und ohne Zementzusatz alle Bedingungen der DIN 1164 bezüglich Erstarrung und Abbindezeit erfüllte. Mit Normsand und Bindemittel angemachte Mörtelmischungen wurden zu Prismen eingeschlagen und ergaben nach 28 Tagen Festigkeitswerte, die sonst beispielsweise mit Abbränden aus Ölschiefer geringsten CaCO₃-Gehaltes, d.h. Lias epsilon erzielt werden.

**Patentansprüche**

1. Verfahren zur Herstellung eines Baustoffs aus Ölschiefer mit hohem Gehalt an $CaCO_3$, wobei der Ölschiefer für Zwecke der Energiegewinnung gebrannt wird und der erzielte Abbrand zerkleinert und mit einer Feuchtigkeitsmenge in Berührung gebracht wird, die eine Umwandlung von freiem CaO zu Ca(OH)₂ bewirkt, dadurch gekennzeichnet, daß der Abbrand durch Besprühen mit Wasser direkt gekühlt und anschließend auf unter 1 mm, insbesondere auf 0,5 bis 1 mm, gemahlen und während des Mahlvorganges mit dem bei der Kühlung entstehenden Dampf - gegebenenfalls unter Zusatz von weiterem Dampf oder Wasser - behandelt wird, wobei die zugeführte Dampfoder Wassermenge über die Temperatur und den Wasserdampfpartialdruck der Brüden entsprechendeinem CaO-Restgehalt von 0 bis 1 Gew.-% geregelt wird.

2. Verfahren nach Anspruch 1, gekennzeichnet durch die Zumischung von Zement im Verhältnis 30: 70 bis 70: 30 vorzugsweise 50: 50.

3. Verfahren nach Anspruch 3, dadurch gekennzeichnet, daß der Zement dem fertig behandelten Abbrand zugemischt wird.

4. Verfahren nach Anspruch 2, dadurch gekennzeichnet, daß der Abbrand zusammen mit Zementklinker gemahlen wird und daß während des Mahlvorganges oder anschließend Dampf oder Wasser zugeführt wird.

## Claims

1. Process for the production of a building material from bituminous shale with a high $CaCO_3$ content burning the oil shale for energy production purposes and crushing the waste which is brought into contact with an amount of a humid matter affecting a transformation of free CaO into $Ca(OH)_2$, characterized by the fact that the waste is directly cooled by water spraying and subsequently ground to a size below 1 mm, in particular to 0.5 to 1 mm, and treated during the grinding process with the vapor produced during the cooling process, if necessary by adding more vapor or water, the added vapor or water amount being controlled by means of the temperature and the water vapor partial pressure of the evaporite corresponding to a residual CaO content of 0 to 1 % by weight.

2. Process as described in claim 1 characterized by adding cement in a bituminous shale/cement ratio ranging between 30: 70 and 70: 30, preferably 50: 50.

3. Process as described in claim 2 characterized by the fact that cement is admixed to the treated waste.

4. Process as described in claim 2 characterized by the fact that the waste is ground together with cement clinker and that vapor or water is added during the grinding process or subsequently.

## Revendications

1. Procédé de fabrication de matériau de construction au départ de schiste bitumineux à teneur élevée en $CaCO_3$, le schiste bitumineux étant brûlé à des fins de récupération d'énergie la perte au feu obtenue étant broyée et portée en contact avec un taux d'humidité entraînant une transformation de CaO libre en $Ca(OH)_2$ caractérisé par le fait que la perte au feux est refroidie directement par l'arrosage à l'eau et broyée ensuite à une granulométrie inférieure à 1 mm, notamment à 0,5 à 1 mm, et traitée pendant le broyage par la vapeur se produisant au cours du refroidissement - en additionnant le cas échéant encore de la vapeur ou de l'eau - le volume de vapeur ou d'eau amené étant réglé par le biais de la température et la pression de vapeur d'eau partielle en fonction d'une teneur résiduelle en CaO de 0 à 1 % en poids.

2. Procédé suivant la revendication 1, caractérisé par l'addition de ciment dans un rapport 30/70 à 70/30, de préférence 50/50.

3. Procédé suivant la revendication 2, caractérisé par le fait que le ciment est additionné à la perte au feu dès son traitement terminé.

4. Procédé suivant la revendication 2, caractérisé par le fait que la perte au feu est broyée avec du clinker en ciment et qu'au cours ou après le broyage de la vapeur ou de l'eau est additionnée.